# EUROPEAN PATENT SPECIFICATION

(11) **EP 2 560 472 B1**
(45) Date of publication and mention of the grant of the patent: **05.08.2015**
(21) Application number: 11727813.5
(22) Date of filing: 20.04.2011
(51) Int. Cl.: A01G 27/00

(54) **GEOCOMPOSITE ELEMENT, PARTICULARLY FOR ENHANCING PLANT GROWTH**
GEOVERBUNDELEMENT, INSBESONDERE ZUR VERBESSERUNG VON PFLANZENWACHSTUM
ÉLÉMENT GÉOCOMPOSITE, NOTAMMENT DESTINÉ À FAVORISER LA CROISSANCE DES PLANTES

(30) Priority: 21.04.2010 PL 39103310
(43) Date of publication of application: 27.02.2013
(73) Proprietor: Uniwersytet Przyrodniczy we Wroclawiu, 50-375 Wroclaw (PL)
(72) Inventor: ORZESZYNA, Henryk, PL-51-649 Wroclaw (PL); GARLKOWSKI, Daniel, Wroclaw (PL); PAWLOWSKI, Andrzej, PL-53-525 Wroclaw (PL); LEJCUS, Krzysztof, PL-51-153 Wroclaw (PL)
(74) Representative: Witek, Rafal
(86) International application number: PCT/PL2011/050008
(87) International publication number: WO 2011/133054

(56) References cited:
- WO-A1-02/19802
- WO-A1-97/33463
- WO-A2-2007/084550
- FR-A1- 2 665 821
- US-A1- 2010 064 579

## Description

The subject of the present invention is a geocomposite element particularly for enhancing plant growth.

The present invention is of use in agriculture, gardening, construction and environmental engineering as an article for retaining water due to which it is possible to stabilise water equilibria which are conditional to plant growth as well as for the aggregation of other substrates influencing correct and effective plant growth.

From literature, it is known that superabsorbents (SAPs), also called hydrogels are loosely crosslinked hydrophilic polymers which can absorb large quantities of water. In the research conducted, the positive was noted of the use of superabsorbents on root formation, development, shoots and drought resistance for example in vegetables, grasses, tobacco and trees. Among their many advantages are lowered plant production costs, significantly improved water management, as well as increased water availability to plants (the reduction of irrigation water can reach as much as 50%), easier efflux of ground-bound carbon dioxide and bacteria, enhanced bacterial and microflora content in the soil, increased osmotic moisture and nutrient absorption capability. Superabsorbents that retain water prevent the flushing out of soil-bound fertilizers and plant protecting agents. Water absorbed by plants from superabsorbents is easily available because the absorbent forces of roots are usually larger than those of water retention by superabsorbents. With ensured optimal conditions, over 90% of SAP-bound water can be utilized.

The use of superabsorbents in agriculture not only retains water but also facilitates its release to plants during drought or in places where intensive surface runoff or rapid infiltration into lower strata causes its insufficiency. Another factor that decreases the absorptive properties of water is the method of use of superabsorbents. One of the methods currently used is the direct introduction of the superabsorbent into the soil and mixing it with the soil to a predefined depth. This solution is not sufficient. Documented attempts to use superabsorbents to increase soil retention and to deliver the water retained therein to plants have yielded unsatisfactory results.The low swelling force of the SAP under soil loading causes it to be unable to swell fully and completely utilise its water retention properties. For this reason its activity under direct use is limited. Furthermore, a superabsorbent mixed with the soil that repeatedly swells and contracts as plants draw water from it alters the soil structure. Furthermore, other disadvantages of such solutions are: the possibility of completely blocking ground pores by the swollen superabsorbent, lack of control over the substrate and superabsorbent migration in the substrate, lack of any possibility of removing the applied superabsorbent and, most of all, limited swelling efficacy when vertical stress loads occur. When used on a slope, this may also result in landslides of the surface soil horizon due to decreased shear resistance. Superabsorbents used on the surface can be susceptible to atmospheric activity, i.e. wind dispersion, accelerated drying, etc.

Due to the difficulties known from prior art, numerous attempts have been made to design an effective alternative to extant superabsorbent use.

Description PL 169462 defines an absorptive element which forms a hydrogel, in the form of a carrier material and polymer insert. This is a water insoluble, absorptive polymer substance which is capable of absorbing considerable quantities of water, which results in the formation of a hydrogel.

Patent application P-362942 discloses a geocomposite tape designed for use in soil substrates in order to increase the retentive capabilities of soil. The tape can be applied to the soil during the biological reconstruction of the slopes of heaps and pits, as well as the slopes and inclines formed during land sculpting. Patent description JP58138807 discloses a geocomposite tape characterized in that the protective elements comprise at least two bands of material of preselected width and length. The two external bands of material are permanently joined together such that the absorbent material contained therein, as well as the materials dissolved therein, can freely swell and contract.

From US 2010/064579 is known a plant watering device comprising a pair of water absorbent shells made from natural coconut husks. Cotton pads are placed between the shells for further water storage and slow persistent release. An amount of plant nutrient and water filtering carbon material is placed within the cotton pads for disbursement to the root system of a plant. The husks and cotton pads are stacked and wrapped in a mesh material. The device is buried in a planter in close proximity to a root system of a plant. However it does not allow capturing and temporary retention of water at high levels, and later the uptake thereof by plant root.

WO9733463 discloses an apparatus for facilitating growth of a plant, comprising: a porous top firstsheet defining a plurality of pores passing therethrough and having a first peripheral edge; a non-porous bottom second sheet, disposed below the first sheet, having a second peripheral edge, the first peripheral edge and the second peripheral edge being affixed to each other, the first sheet and the second sheet defining a cavity therebetween, and a superabsorbent material disposed within the cavity, capable of absorbing water and delivering water to the plant when roots of the plant are adjacent the apparatus, and capable of expanding when absorbing water so as to cause the second sheet to form an impermeable recepticle capable of holding water not absorbed by the super absorbent material for use by roots of the plant. The apparatus however is not provided with a cavity that could retain its structure under loading by soil, which lowers swallowing capacity of superabsorbent material placed inside.

FR2665821 discloses a method for regulating the moisture in the soil in which plants are grown, one or more containers comprising a water-permeable wall and a wall which is not permeable to water are arranged on the surface of the soil , the water-permeable wall being placed in contact with the soil and the impermeable wall (11) being located opposite the soil. These containers are preimpregnated with water and contain a chemical body having the property of expanding in the presence of water and of retaining a quantity of water. However, it is silent about a solution that would enable to increase water retention level in a significant way.

The free swelling of the absorptive material is assured only on the surface of the terrain when the geocomposite tape is not loaded with a soil layer, whereas the method of use stipulates its use inside the vegetative soil layer and thus under conditions of soil loading on the geocomposite tape. The cause of this is the use of typical, supple geotextiles. Geotextiles are elastic materials of negligible rigidity and bending resistance, and thus cannot give adequate resistance to counteract the load from the soil found above such a tape. By the same token, such materials fail to ensure full swelling capability of the water-absorbent material due to the fact that they collapse under the load of the soil, ground or other located layer above it, wherein the tape has been located. As a consequence, following its application in the soil without prior activation with water, the tape elements remain compressed and make it impossible for the absorbent material to fully swell. This situation also occurs when water is taken up by plant roots. The absorption of water by the roots results in a loss of volume by the superabsorbent, and the empty space formed inside of the element causes the geocomposite tape to collapse due to the negligible resistance of the sheathing material to bending. The superabsorbent found inside lacks the capability to reabsorb water because it lacks free space to swell and its properties do not allow it to increase this volume due to the shifting of the soil. The reason for this is the demonstrated low swelling force of superabsorbents. Low swelling force of SAPs (absorption under load AUL) means that the tape element under load loses its water retention capabilities because the water absorbing material located inside can only swell to a minimal degree delimited by the stress stemming from the soil, ground or other layer overtop of it.

Thus the state of the art yields the need to design a solution overcoming the extant disadvantages.

The goal of the present invention is to design a geocomposite element for storing water, which possesses significantly augmented water retention capabilities, which is usable in agriculture, particularly in low water availability. At the same time, it will make possible the effective and multiple use of the physicochemical properties of a superabsorbent.

The odjective is achieved with a geocomposite element according to claim 1.

Preferably, the skeleton structure is made of a mesh or geogrid or perforated tapes or spatial drainage mats, or woven fibres, or wires or a synthetic and/or natural material. A natural material can be willow shoots or hemp, or coconut fibre, and the synthetic material can be, for example, polyethylene.

Preferably, the skeleton structure is in the form of a cylinder, sphere, cube or a body with a base in the shape of the number 0 or the number 8 or another body. Preferably, the sheath is a mat or a geomat, or textile, wherein the sheath is made of raw, 100% synthetic fibrous mat, wherein the fibrous mat is 100 % synthetic, including polyester, or the textile is of the group encompassing charmeuse.

Preferably, under the bottom portion of the sheath is a material of low permeability or an impermeable material to water and aqueous solutions, with a surface area at least equal to that of the base of the geocomposite element.

Preferably, the geocomposite elements are connected in a linear fashion.

A geocomposite element according to the present invention enhances plant growth. The aforementioned element is a spatial, multimaterial structure containing in particular a superabsorbent (hydrogel) or another absorbent material with properties similar to a superabsorbent, which is capable of retaining water and solutions thereof (rainfall or irrigation water infiltrating the soil) whose structure ensures the free swelling of the water (and its solutions) absorbent material regardless of the loads acting upon the structure, and the water gathered by the geocomposite element structure can be taken up by the root system penetrating it. The material absorbing the water or its solutions of nutrients for plant growth is found inside of the space defined by the skeleton structure. This facilitates its maximum swelling and the use of its absorptive properties without the limiting effect of external forces acting thereon, i.e. loading by the soil or ground found above the geocomposite element.

The structure of the geocomposite element ensures sufficient space for the water absorbent material to swell, allowing it to utilise its full potential. The skeleton structure is made in such a way as to secure against crushing by soil loading and at the same time its surface is elastic enough such that under load it forms concavities that allow the ingress of water into the geocomposite element. The skeleton structure of the geocomposite element also facilitates such a spatial distribution of the absorbent material that air spaces are retained between its particles which is essential for proper plant growth. A geocomposite element as a whole is also characterised by elasticity such that it can adapt to surface contours where it is installed, through which it is also resistant to deformations by soil settling or agricultural equipment driving overtop.

The geocomposite element placed in the soil retains infiltrating rainfall. Plant roots can freely grow through the sheath of the geocomposite element and can take up water accreted by the superabsorbent. The water contained therein facilitates faster and more effective growth during the vegetative period and survival during drought.

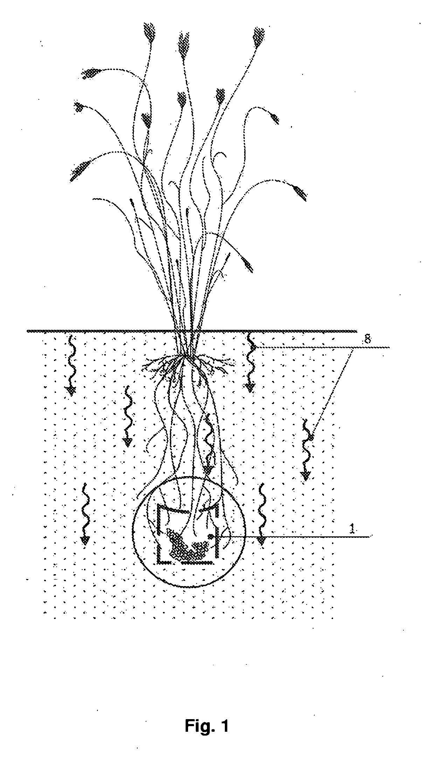

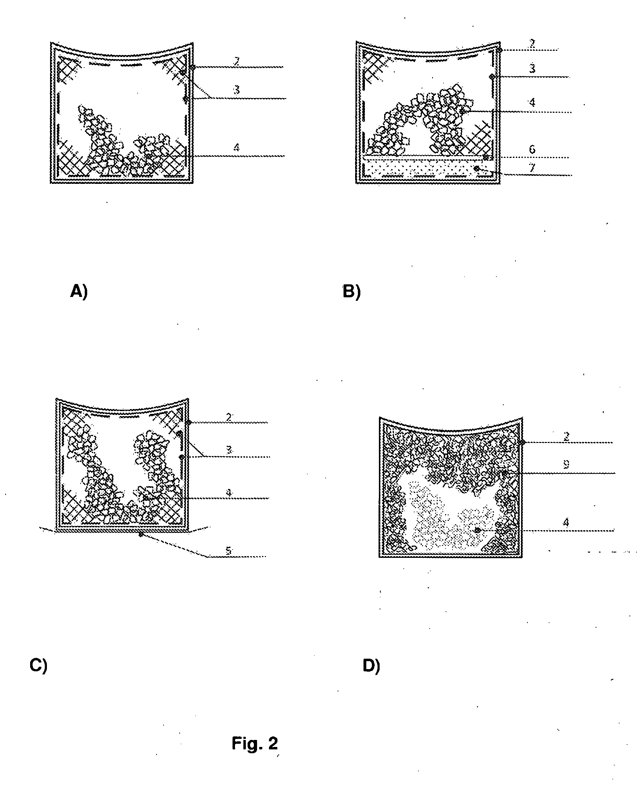

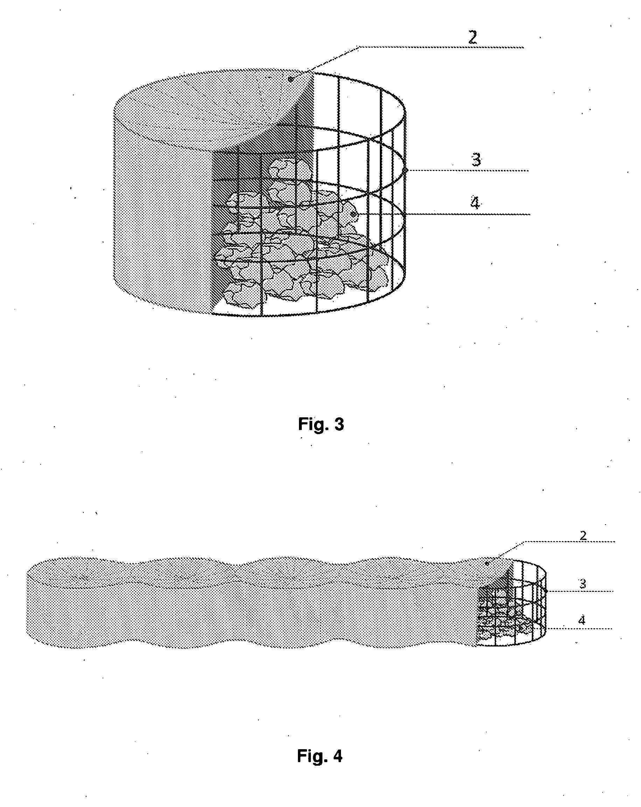

The present invention is better defined in the illustrated example embodiments, in which fig. 1 is a schematic representation of a geocomposite element used in a substrate, fig. 2 represents cross sections of variants of geocomposite elements, wherein fig. 2A is a geocomposite element composed of a sheathed skeleton structure whose cavity contains a superabsorbent; fig. 2B represents a geocomposite element with a separate fertilizer layer separated from the absorbent material by a fibre mat layer; fig. 2C represents a geocomposite element, whose interior portion contains a material of low or no permeability to water or aqueous solutions, fig. 2D represents a geocomposite element whose skeleton structure is made of wound wires; fig. 3 represents a cylindrical geocomposite element; fig. 4 represents cylindrical geocomposite elements connected linearly.

Example 1. Geocomposite element 1 consists of a skeleton structure 3 in the form of a cylinder and a sheath 2 separating it from the soil, which together form a cavity and enable it to retain this cavity under loading by soil or substrate, which facilitates the free swelling of the water absorbent material 4 found inside. The skeleton structure is made of polyethylene mesh.

The geocomposite element 1 is placed in the soil or substrate which facilitates plant growth in order to capture a portion of rainfall or irrigation water 8 to fulfill the requirements of developing plants. The superabsorbent or mixture of absorbing materials is placed in the geocomposite element 1 as a granulate, powder or a mixture thereof, which during their initial irrigation freely swell in the space delimited by the skeletal structure 3. In an alternative version, they are pushed into the spaces between the elements (twisted fibres separating superabsorbent particles) during swelling so that one can avoid their aggregation, and whereby air is trapped inside the geocomposite, which is conducive to plant growth.

Example 2. Geocomposite element 1 wherein the skeleton structure 3 consists of forms of fibres or wires 9. This is in the form of a rectangular volume. Example 3. Geocomposite element 1 possessing in its lower portion a material of low or no premeability 5.

Example 4. Geocomposite element 1, which contains fertilizers with a swelling agent 4. The fertilizers are used in a separate layer 7, separated from the swelling agent 4 by a fibrous mat layer 6. This reduces the effect of fertilizers on the effectiveness of the absorption of water by the absorbing agent. The fertilizer is poured into the geocomposite element 1, into the cavity which is enclosed by a layer of fibrous mat separating the fertilizer layer 7 from the absorbent material 4. The fibrous layer 6 separating the fertilizer layer 7 is placed inside such that throughout its entire circumference it is in contact with the sheath 2.

Example 5. Geocomposite element 1, whose skeleton structure 3 consists of spatial forms obtained by joining elements of mesh, perforated tape, as well as forms cut out of drainage mats or ones woven from wires or fibres 9, preformed such that a cavity is maintained for the swelling absorbent material. The number of drainage mats inside the geocomposite element 1 is dependent on the amount of water which is to be retained. In case more than one layer of drainage mat is used, they are interspaced with a plastic mesh or connected with clips so that they do not move with respect to one another. Such a skeleton structure 3 is placed in the sheath 2, whose size allows it slight deflection on the upper portion of the geocomposite element 1 under loading. The absorbent material 4 is poured inside, and the entirety is sealed.

The geocomposite Element 1, in all its embodiment forms given in the examples, is installed following its prior immersion or in fertilizer solution, such that the swollen superabsorbent fills its cavity. It may be irrigated with water or nutrients solutions already in situ. Geocomposite element 1, depending on its form, can be placed at the bottom of an excavation or ditch, but may also be evenly distributed on meshes or mats used for the surface reinforcement of cliffs and slopes, and individual elements may be anchored, i.e. with the aid of rods or posts. This forms a system in which plants adhere with the substrate, which increases the resistance to erosion of the whole layer.

The absorbent structure of the geocomposite element placed in the substrate may be removed from the soil at any time, in contrast to the situation when the water absorbing factor is applied directly into the soil or substrate. Geocomposite element 1, due to its structure and dimensions eliminates any possibility of the uncontrolled migration of the super absorbent in the substrate. In the case of the required short period of enhancing plant growth [1 to 3 years], elements of the skeleton structure are made of natural, biodegradable materials.

In the case when the geocomposite element 1 is made according to example 1, the skeleton structure 3 is made of a band of polyethylene mesh. An element is formed in the shape of the number 0 or 8. A sheathing sleeve sewn to have a cross section such that the textile will gently deflect underneath soil loading and at the same time does not remain loose, is drawn onto the forms element, where after an appropriate amount of absorbent material 4 for his added, and the ends of the sleeve are closed with clips. The complete geocomposite element 1, depending on the shape, has to be placed in an appropriate fashion, i.e. those in which the skeleton is formed in the shape of the letter 8 or 0 must be placed flat [the 8 or 0 are shapes seen from above, when the geocomposite element 1 lays flat, in parallel to the terrain]. Only in this fashion can the shape and spatial structure be retained. The shape of the geocomposite element 1 depends on the direction of application and is dependent, in the case of trees and bushes, on the type and age of plants as well as their size and the shape of the root system. In the case of grasses and plants used to reinforce slopes, inclines and cliffs against erosion, it depends on the method and technology and their placement, whereas in the case of decorative plants is dependent on plant species, the shape of the container and the space of the substrate made available for plant growth.

The sheath 2 separates the internal space of the structure from the soil environment, it captures free and capillary bound water facilitating its uptake by the absorbent material. In particular, it is the role of the sheath 2 to protect the cavity formed by the skeleton structure 3, in which the absorbent material 4 for can freely swell against the interior of the skeleton structure 3 being filled by soil particles, the maintenance of the inverted domes formed by the soil loading the geocomposite element 1 which facilitates the ingress of water into the geocomposite element 1, the capturing of the infiltrating rainfall 8 from soil capillaries in which it is maintained by a meniscus system and then its transport inside the sheath 2 and gathering in the lower portion of the geocomposite element 1 from where it is collected by particles of the superabsorbent material 4. The sheath 2 can be connected with the skeleton structure 3 or merely wound around it and slightly under tension. The sheath 2 is made of a material which permits the ingress of water into the geocomposite element 1 and which makes it impossible for the absorbent material 4 to exit the structure. The weave and texture of the sheath 2 has to ensure collection of water from the soil capillaries [the spaces between the grains and particles of soil or ground], its transport into the geocomposite element 1 and then contact with all of the absorbent material 4 and water, and along with the skeleton structure 3 must enable roots to grow through the structure.

Sheath 2 may be made of materials which fulfill the current requirements regarding stability and durability, i.e. polyethylene poly-propylene, polyester, polyamide as well as polyacrylnitrile. The properties of these materials are additionally improved through the addition of stabilizers. The fibrous mat may be 100% polyester (PES), raw, needled, with a mass per surface 100 g/m² or 100% PES, needled, with a mass per surface of of 200 g/m². An example of a textile is chermaise, 100% poliester, with a mass per surface of 300 g/m².

The solution according to the present invention makes it possible to effectively and repeatedly use the absorptive material, which significantly protracts the life of a plant in low water states or drought. A preferential effect of the present invention is also the elimination of the adverse effects of using dispersed superabsorbents, which are characterised by a low swelling force, changes to the soil structure as well as the lack of any control over their dispersal and the possibility of subsequent removal. In particular cases, a geocomposite element according to the present invention may also absorb water from the soil or ground in its surroundings. Water may also be absorbed through capillary seepage.

Geocomposite element 1, according to the present invention, improves decorative plant culturing conditions in pots, containers and substrates ensures vegetation, facilitates long-distance transport and exhibition without the need to replete water.

The geocomposite element 1 has been tested a number of times. Experiment 1. The experiment was performed on flowering decorative plants characterised by large water requirements due to considerable transpiration. At the bottom of pots containing decorative plants, during the initial stages of flowering, geocomposite element 1 was placed, and identical group lacking geocomposite element 1 was treated as the control. The substrate for all of the flowers was saturated with water and then left unwatered. After three days we observed the first symptoms of wilting, and after five days all of the plants in the control group stopped being decorative and wilted. In the group with the geocomposite element 1 the first signs of wilting were observed after 6 days following watering, and the wilting process occurred over the next three to five days. Experiment 2. Flowering plants with large water requirements due to considerable transpiration which were collocated with a geocomposite element 1, maintained their good condition over a period 100 to 200% longer than plants lacking the geocomposite element 1. The differentiated period of good plant condition was dependent on the method of use and the type of geocomposite element 1. For Bonsai trees, the period of good plant condition without watering was extended from 100 do 300%.

Experiment 3. The ability of plants to seek water in the case of grasses sown on sandy substrate, wherein a geocomposite element 1 was placed some 30 cm below the surface, caused the roots to penetrate the entire soil horizon during a vegetative season and to form a root mesh. On the same substrate and grass mix, but without the geocomposite element 1, over the same time, the grass formed a sod with a shallow and poorly developed root system.

When geocomposite element 1 is used under bushes and trees, in large surface-area installations, equipment is used that has proven useful in gardening or forestry applications. Mechanical devices available on the market are used without adaptation or following their appropriate modification that amends its capabilities. The geocomposite element 1 is installed following its prior immersion in water or fertilizer solution, such that it is installed following its previous immersion in water or a fertilizer solution, such that the swelling absorbent material 4 fills its cavities. When planting trees, geocomposite element 1 is arranged on the bottom of the pits prepared for planting. In the case of shrubs, geocomposite elements 1 are placed in a hole at the bottom of the seedlings, which is made manually, or using a drilling rig or mini-excavators. In the event of incorporation of geocomposite element 1 into hedgerows in large installations, a device tested in the work of horticultural or forestry is adapted. Mechanical devices on the market are used without adaptation or modified using appropriate streamlining of the options of the hardware. The geocomposite element 1 is installed after immersion in water or fertilizer solution, so that the swollen absorbent material 4 fills the cavities. When hedges are planted, geocomposite elements 1 are arranged on the bottom of the trench line.

In the event of a geocomposite element 1 incorporated under a tree already growing in large surface installation, device tested in the horticultural and forestry industries are adapted. Commercially available mechanical devices on the market are used without adaptation or modified using appropriate streamlining of the options of the hardware. Geocomposite elements 1 are installed after immersion in water or fertilizer solution, so that the swollen absorbent material 4 fills the cavities. In the case of the application of geocomposite elements 1 under already growing trees, they are installed in pits made obliquely to the root system.

In the event of the use of a geocomposite element 1 under field crops in large surface area installations, device tested in the horticultural and forestry industries are adapted. Mechanical devices available on the market are used without adaptation or modified using appropriate streamlining of the options of the hardware. A geocomposite element 1 is installed after immersion in water or fertilizer solution, so that the swollen absorbent material 4 fills the cavities. When fruit bush and strawberry and some vegetable seedlings are planted, including cucumbers and intensive crops geocomposite elements 1 are placed at an appropriate depth in parallel trenches.

In the event of the use of a geocomposite element 1 to in gabions, the geocomposite element 1 is installed after immersion in water or fertilizer solution, so that the swelled absorbent material 4 fills the cavities. In the course of filling the basket with stones, geocomposite elements 1 are arranged in one or several layers of voids, which are then vaulted to maintain the rigidity of the basket. Geocomposite elements 1 can also be placed in the ground at the back of the basket. In gabion mats, the geocomposite elements 1 are arranged inside the mats, as well as in the ground under the mattress.

If a geocomposite element 1 is used in outer wall of reinforced soil, the geocomposite elements 1 are arranged inside the external head of each laid layer, as well as folding out of the head, which is filled with fertile soil. In the case of wall finishes molded containers, lawn geocomposite elements 1 are arranged by hand on their bottom, before filling with soil. A geocomposite element 1 is installed after immersion in water or fertilizer solution, so that the swollen absorbent material 4 fills the cavities.

In the event of the use of a geocomposite element 1 on slopes and inclines, while evening the slope surface before laying a layer of fertile soil, geocomposite elements 1 are combined linearly and arranged in rows on the slope surface or in shallow grooves and are then anchor up, i.e. with wooden stakes or steel rods. Geocomposite elements 1 may also be placed crossways. Geocomposite elements 1 are installed after immersion in water or fertilizer solution, so that the swollen absorbent material 4 fills the cavities.

In the event of the use of geocomposite elements 1 in pots and containers for seedlings of flowers, a small size form of a geocomposite element 1 is arranged in the bottom of each container. For large volume containers and containers for multi-species systems, appropriately selected forms of geocomposite elements are arranged over the drainage system of the container. In multiflorous installations, geocomposite elements 1 are arranged at different levels depending on the needs of a particular plant. A geocomposite element 1 is installed after immersion in water or fertilizer solution, so that the swollen absorbent material 4 fills the cavities.

In the event of the use of geocomposite elements 1 in newly established lawns, various forms of geocomposite elements 1 are spread on the surface and then anchored and covered with a layer of fertile soil. For existing lawns, rows are cut in their surface into which geocomposite elements 1 are introduced in a line or crossways. The grooves are then backfilled with excavated soil, and the damaged sod layer is resown. Geocomposite elements 1 are installed after immersion in water or fertilizer solution, so that the swelled swellable material 4 filled its space.

A geocomposite element 1 according to the present invention can be used everywhere where plant growth is limited by the availability of water, or where one wants to ensure optimal conditions for plant development. The basic application geocomposite elements absorbing water is the use in a soil environment in order to capture and temporarily retain water and provision plants with rainwater or water supplied by an irrigation system. A geocomposite element 1 according to the present invention can be applied in vegetable crops, flowers, nurseries, fruit, etc. Geocomposite elements 1 according to the present invention can also be used in hydroponic crops and in places where the runoff of infiltrating precipitation is deliberately increased, i.e. on green roofs, in gabions and gabion mattresses. A significant improvement of water retention is also achieved in plant systems for retaining structures, the so-called green walls, sound-barrier and energy-intensive structures, as well as on slopes, inclines and embankments made from natural materials and anthropogenic ones.

Development of a water absorbent geocomposites facilitates the use of superabsorbents in areas with significant slope, i.e. on the slopes of earth structures. Previously, it was impossible or very risky. A superabsorbent mixed with soil swells with rainfall. Even with the limited swelling capacity, due to the lack of space and loading stress, is able to fill a portion of the pores in soil. The resulting gel filling soil pores significantly reduces the degree of internal friction. On slopes and inclines this can lead to a landslide of a layer of soil mixed with the superabosrbent. Thus, a geocomposite element 1 according to the present invention can provide long-lasting and effective protection against erosion and safeguard the stability of the outer layer of tufted plants with roots growing into its interior, which creates a kind of "mat" consisting of the root system and the geocomposite element 1 affixed to the ground, increasing resistance to erosion.

## Claims

1. A geocomposite element, particularly for enhancing plant growth, which possesses water permeable sheathing elements as well as a material that absorbs water placed in a cavity made by the sheathing elements, **characterized in that** it comprises a skeleton structure (3) that forms a cavity, and enables to retain this cavity under loading by soil or substrate, for a superabsorbent (SAP) or another absorbent material with properties similar to a superabsorbent, (4) and a sheath (2) located on the surface of the skeleton structure, wherein the skeleton structure and the sheath enable the roots of the plants to grow inside the geocomposite element.

2. An element according to Claim 1, **characterised in that** the skeleton structure (3) is formed from mesh or geomesh, or perforated tape, or spatial drainage mats, or woven fibres or wires.

3. An element according to Claim 1, **characterised in that** the skeleton structure (3) is made of a natural and/or synthetic material.

4. An element according to Claim 3, **characterised in that** the natural material is wicker or hemp, or coconut fibre.

5. An element according to Claim 3, **characterised in that** the synthetic material is polyethylene.

6. An element according to Claim 1, **characterised in that** the skeleton structure (3) is cylindrical or spherical or cubical, or in the form of a volume based on the digits of a 0 or 8, or another volume.

7. An element according to Claim 1, **characterised in that** the sheath (2) is a fibrous mat, or fibrous geomat or a textile.

8. An element according to Claim 1, **characterised in that** the sheath (2) is made of raw, 100% synthetic fibrous mat.

9. An element according to Claim 8, **characterised in that** the fibrous mat is made of polyester.

10. An element according to Claim 7, **characterised in that** the fibrous mat is selected from a group encompassing chermaise.

11. An element according to Claim 1, **characterised in that** underneath of the lower portion of the sheath (2), is a material (5) of low or no permeability (5) to water or aqueous solutions, with a surface area at least equal to that of the base of the geocomposite element (1).

12. An element according to Claim 1, **characterised in that** the geocomposite elements (1) are connected to one another linearly.

13. Use of a geocomposite element according to claims 1-12 for surface reinforcement of cliffs and slopes, and prevention from landsiliding and erosion of the surface ground.

## Patentansprüche

1. Ein Geoverbundelement, insbesondere zur Verbesserung des Pflanzenwachstums, das wasserdurchlässige Ummantelungselemente sowie ein Material besitzt, das in einer durch die Ummantelungselemente gebildeten Kavität befindliches Wasser absorbiert, dadurch charakterisiert, dass es eine Skelettstruktur (3) umfasst, die eine Kavität bildet, und ermöglicht, diese Kavität unter Boden- oder Substratbeladung zu erhalten, für einen Superabsorber (SAP) oder ein anderes Absorbierungsmaterial mit einem Superabsorber ähnelnden Eigenschaften (4), und eine Ummantelung (2), die sich auf der Oberfläche der Skelettstruktur befindet, wobei die Skelettstruktur und die Ummantelung den Wurzeln der Pflanzen das Wachstum innerhalb des Geoverbundelements erlauben.

2. Ein Element gemäß Anspruch 1, dadurch charakterisiert, dass die Skelettstruktur (3) aus einem Netz oder Geonetz oder perforiertem Band oder räumlichen Drainagemattan oder gewebten Fasern oder Drähten gebildet wird.

3. Ein Element gemäß Anspruch 1, dadurch charakterisiert, dass die Skelettstruktur (3) aus einem natürlichen und/oder synthetischen Material hergestellt ist.

4. Ein Element gemäß Anspruch 3, dadurch charakterisiert, dass das natürliche Material Korb oder Hanf oder Kokosnussfaser ist.

5. Ein Element gemäß Anspruch 3, dadurch charakterisiert, dass das synthetische Material Polyethylen ist.

6. Ein Element gemäß Anspruch 1, dadurch charakterisiert, dass die Skelettstruktur (3) zylindrisch oder sphärisch oder kubisch, oder in einer räumlichen Form basierend auf den Ziffern 0 oder 8, oder einer anderen räumlichen Form ist.

7. Ein Element gemäß Anspruch 1, dadurch charakterisiert, dass die Ummantelung (2) eine faserige Matte oder faserige Geomatte oder ein Textil ist.

8. Ein Element gemäß Anspruch 1, dadurch charakterisiert, dass die Ummantelung (2) aus roher, 100% synthetischer Fasermatte ist.

9. Ein Element gemäß Anspruch 8, dadurch charakterisiert, dass die Fasermatte aus Polyester ist.

10. Ein Element gemäß Anspruch 7, dadurch charakterisiert, dass die Fasermatte ausgewählt ist aus einer Gruppe umfassend Chermaise.

11. Ein Element gemäß Anspruch 1, dadurch charakterisiert, dass sich unter dem unteren Teil der Ummantelung (2) ein für Wasser oder wäßrige Lösungen wenig oder nicht durchlässiges Material (5) befindet, mit einer Oberfläche, die zumindest gleich groß ist wie die der Basis des Geoverbundelements (1).

12. Ein Element gemäß Anspruch 1, dadurch charakterisiert, dass die Geoverbundelemente (1) linear miteinander verbunden sind.

13. Verwendung eines Geoverbundelements gemäß Ansprüchen 1-12 zur Oberflächenverstärkung von Felswänden und Hängen, und zur Verhinderung von Erdrutschen und Erosion des Oberflächengrundes.

## Revendications

1. Elément géocomposite, notamment pour améliorer la croissance des plantes, qui possède des éléments de gainage perméables à l'eau ainsi qu'un matériau qui absorbe l'eau placée dans une cavité faite par les éléments de gainage, **caractérisé en ce qu'**il comprend une structure de squelette (3) qui forme une cavité, et permet de maintenir cette cavité sous un chargement par un sol ou un substrat, pour un superabsorbant (SAP) ou un autre matériau absorbant ayant des propriétés similaires à un superabsorbant, (4) et une gaine (2) située sur la surface de la structure de squelette, dans lequel la structure de squelette et la gaine permettent aux racines des plantes de croître à l'intérieur de l'élément géocomposite.

2. Elément selon la revendication 1, **caractérisé en ce que** la structure de squelette (3) est formée à partir d'un treillis ou d'un treillis géotextile, ou d'une bande perforée, ou d'un mat de drainage spatial, ou de fibres tissées ou de fils.

3. Elément selon la revendication 1, **caractérisé en ce que** la structure de squeiette (3) est faite d'un matériau naturel et/ou synthétique.

4. Elément selon la revendication 3, caractérisé en que le matériau naturel est de l'osier ou du chanvre, ou de la fibre de noix de coco.

5. Elément selon la revendication 3, **caractérisé en ce que** le matériau synthétique est du polyéthylène.

6. Elément selon la revendication 1, **caractérisé en ce que** la structure de squelette (3) est cylindrique ou sphérique ou cubique, ou sous la forme d'un volume basé sur les chiffres d'un 0 ou d'un 8, ou un autre volume.

7. Elément selon la revendication 1, **caractérisé en ce que** la gaine (2) est un mat de fibres, ou un géomat de fibres ou un textile.

8. Elément selon la revendication 1, **caractérisé en ce que** la gaine (2) est faite d'un mat à 100 % de fibres synthétiques, brut.

9. Elément selon la revendication 8, **caractérisé en ce que** le mat de fibres est fait de polyester.

10. Elément selon la revendication 7, **caractérisé en ce que** le mat de fibres est choisi parmi un groupe englobant de la charmeuse.

11. Elément selon la revendication 1, caractérisé qu'au-dessous de la partie inférieure de la gaine (2) se trouve un matériau (5) ayant une faible ou aucune perméabilité (5) à l'eau ou aux solutions aqueuses, avec une aire de surface au moins égale à celle de la base de l'élément géocomposite (1).

12. Elément selon la revendication 1, **caractérisé en ce que** les éléments géocomposites (1) sont reliés linéairement les uns aux autres.

13. Utilisation d'un élément géocomposite selon les revendications 1 à 12 pour un renforcement de surface de falaises et de talus, et la prévention des glissements de terrain et de l'érosion du sol de surface.
